# EUROPEAN PATENT APPLICATION

(11) **EP 2 713 566 A1**
(43) Date of publication of application: **02.04.2014**
(21) Application number: 12864182.6
(22) Date of filing: 15.08.2012
(51) Int. Cl.: H04L 12/70

(54) **SHARING METHOD, SYSTEM, SERVER AND TERMINAL DEVICE FOR PERSONAL CONTENT**

(30) Priority: 04.01.2012 CN 201210000970
(71) Applicant: Huawei Device Co., Ltd., Shenzhen, Guangdong 518129 (CN)
(72) Inventor: ZHANG, Huiping, Shenzhen Guangdong 518129 (CN); WANG, Lei, Shenzhen Guangdong 518129 (CN); FAN, Shunan, Shenzhen Guangdong 518129 (CN); GAO, Wenmei, Shenzhen Guangdong 518129 (CN); LV, Xiaoqiang, Shenzhen Guangdong 518129 (CN)
(74) Representative: Isarpatent
(86) International application number: PCT/CN2012/080127
(87) International publication number: WO 2013/102355

(57) **Abstract**

The present invention provides a personal content sharing method, system, server, and terminal device. The method includes: receiving a first request message sent by a first terminal device, where the first request message includes: attribute information of a personal content in a first personal content database, generating and storing configuration information of the first personal content database according to the attribute information, receiving a second request message sent by a second terminal device, where the second request message includes: a content identifier of a target personal content in the first personal content database, and providing the second terminal device with the target personal content according to the configuration information. With the personal content sharing method, system, server, and terminal device provided in the present invention, a second user is capable of actively obtaining a personal content of a first user in a case where no pushing is performed by the first user, thereby extending an application scope of a personal content sharing service.

## Description

### TECHNICAL FIELD

Embodiments of the present invention relate to an Internet protocol television (Internet Protocol Television, IPTV for short) technology, and in particular, to a personal content sharing method, system, server, and terminal device.

### BACKGROUND

With the continuous development of an IPTV technology, IPTVs are applied more and more popularly. While obtaining rich contents by using an IPTV system, a user using the IPTV also expects to share, with other users by using the IPTV system, a content concerned or favored by the user, that is, a personal content.

Currently, in an existing IPTV system, an IPTV user may share the personal content with other users in the following two manners, so that a target user can obtain the personal content. Manner 1: The IPTV user directly sends a link corresponding to the personal content to the target user; and the target user clicks the link, and watches the content corresponding to the link. Manner 2: The IPTV user transmits a content that is being watched to the target user in real time; and the target user and the IPTV user synchronously watch the content.

When the target user obtains the personal content by using the existing personal content sharing method, the IPTV user is required to actively send the content or the content link to the target user. If the IPTV user does not actively send the content or the content link, other users are incapable of obtaining the personal content of the user. Moreover, the user is required to send the content to a user having a specific target, and each time only a single content can be sent. If it is required to send the content to multiple users, or if it is required to send multiple contents, multiple sending processes are required for implementation. Therefore, the existing personal content sharing method has a small application scope.

### SUMMARY

Embodiments of the present invention provide a personal content sharing method, a content sharing server, a terminal device, and a personal content sharing system, which are used to overcome a defect in the prior art, and extend the application scope of a personal content sharing service.

In a first aspect, an embodiment of the present invention provides a personal content sharing method, including:
receiving, by a personal content sharing server, a first request message sent by a first terminal device, where the first request message includes: attribute information of a personal content in a first personal content database, and the attribute information at least includes a content identifier of the personal content;
generating and storing, by the personal content sharing server, configuration information of the first personal content database according to the attribute information, where the configuration information of the first personal content database includes: a content identifier of at least one personal content and personal content access indication information corresponding to the content identifier;
receiving, by the personal content sharing server, a second request message sent by a second terminal device, where the second request message includes: a content identifier of a target personal content in the first personal content database; and
obtaining, by the personal content sharing server, corresponding personal content access indication information according to the content identifier of the target personal content, and providing the second terminal device with the target personal content according to the personal content access indication information.

In a second aspect, an embodiment of the present invention provides a personal content sharing server, including:
an IPTV application entity, configured to receive a first request message sent by a first terminal device, where the first request message includes: attribute information of a personal content, and the attribute information at least includes a content identifier of the personal content; and generate and store configuration information of a first personal content database according to the attribute information, where the configuration information of the first personal content database includes: a content identifier of at least one personal content and personal content access indication information corresponding to the content identifier;
an IPTV control entity, configured to receive a second request message sent by a second terminal device, where the second request message includes: a content identifier of a target personal content in the first personal content database; obtain corresponding personal content access indication information from the IPTV application entity according to the content identifier of the target personal content; and establish a session between the second terminal device and a content server according to the personal content access indication information; and
a content server, configured to store the personal content in the first personal content database, and provide the second terminal device with the target personal content by using the session.

In a third aspect, an embodiment of the present invention provides a personal content sharing method, including:
generating, by a first terminal device, a first request message, where the first request message includes: attribute information of a personal content in a first personal content database, and the attribute information at least includes a content identifier of the personal content; and
sending, by the first terminal device, the first request message to a personal content sharing server, so that the personal content sharing server generates and stores configuration information of the first personal content database according to the attribute information, where the configuration information of the first personal content database includes: a content identifier of at least one personal content and personal content access indication information corresponding to the content identifier.

In a fourth aspect, an embodiment of the present invention provides a terminal device, including:
a message generating unit, configured to generate a first request message, where the first request message includes: attribute information of a personal content in a first personal content database, and the attribute information at least includes a content identifier of the personal content; and
a first sending unit, configured to send the first request message to a personal content sharing server, so that the personal content sharing server generates and stores configuration information of the first personal content database according to the attribute information, where the configuration information of the first personal content database includes: a content identifier of at least one personal content and personal content access indication information corresponding to the content identifier.

In a fifth aspect, an embodiment of the present invention provides a personal content sharing method, including:
sending, by a second terminal device, a second request message to a personal content sharing server, where the second request message includes: a content identifier of a target personal content in a first personal content database, so that the personal content sharing server obtains corresponding personal content access indication information according to the content identifier of the target personal content; and
receiving, by the second terminal device, the target personal content provided by the personal content sharing server according to the personal content access indication information.

In a sixth aspect, an embodiment of the present invention provides a terminal device, including:
a second sending unit, configured to send a second request message to a personal content sharing server, where the second request message includes: a content identifier of a target personal content in a first personal content database, so that the personal content sharing server obtains corresponding personal content access indication information according to the content identifier of the target personal content; and
a second receiving unit, configured to receive the target personal content provided by the personal content sharing server according to the personal content access indication information.

In a seventh aspect, an embodiment of the present invention provides a personal content sharing system, including: the personal content sharing server in the second aspect according to the embodiment of the present invention, the terminal device in the fourth aspect according to the embodiment of the present invention, and the terminal device in the sixth aspect according to the embodiment of the present invention.

It can be known from the foregoing technical solutions that, a first user establishes the first personal content database in the personal content sharing server by using the first terminal device, and stores a content identifier of a personal content of the first user to the first personal content database; a second user sends, by using the second terminal device, a request message including a content identifier of a target personal content in the first personal content database; and the personal content sharing server obtains corresponding configuration information according to the content identifier, and establishes a session according to the configuration information, so that the second terminal device obtains and watches a corresponding personal content. Therefore, in a case where no pushing is performed by the first user, the second user can still actively obtain the personal content of the first user by accessing the first personal content database, thereby extending the application scope of the personal content sharing method.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flow chart of a personal content sharing method according to Embodiment 1 of the present invention;
FIG. 2 is a signaling flow chart of establishing a personal content database by a first terminal device in a personal content sharing method according to Embodiment 2 of the present invention;
FIG. 3 is a signaling flow chart of obtaining a personal content of a first content database by a second terminal device in a personal content sharing method according to Embodiment 3 of the present invention;
FIG. 4 is a signaling flow chart of obtaining a personal content of a first content database by a second terminal device in a personal content sharing method according to Embodiment 4 of the present invention;
FIG. 5 is a signaling flow chart of obtaining a personal content of a first content database by a second terminal device in a personal content sharing method according to Embodiment 5 of the present invention;
FIG. 6 is a schematic structural diagram of a personal content sharing server according to Embodiment 6 of the present invention;
FIG. 7 is a schematic structural diagram of a terminal device according to Embodiment 7 of the present invention;
FIG. 8 is a schematic structural diagram of a terminal device according to Embodiment 8 of the present invention; and
FIG. 9 is a schematic structural diagram of a personal content sharing system according to Embodiment 9 of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

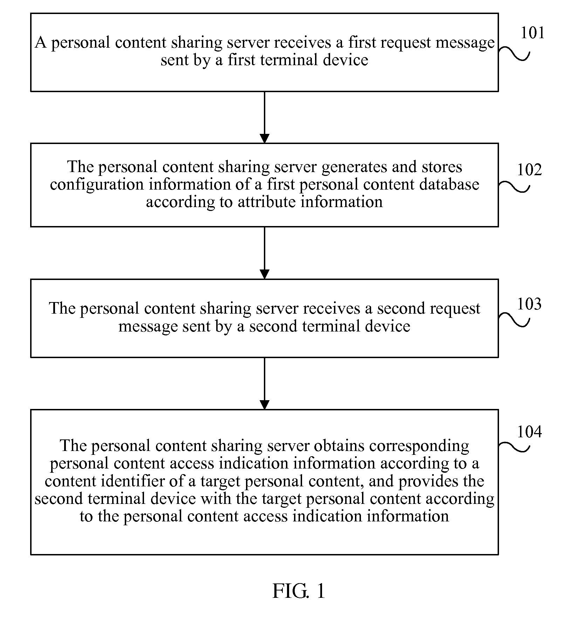

FIG. 1 is a flow chart of a personal content sharing method according to Embodiment 1 of the present invention. In Embodiment 1 and the following embodiments of the present invention, a user using a first terminal device is a first user, and a user using a second terminal device is a second user. The second user obtaining a personal content of the first user is taken as an example. As shown in FIG. 1, the method includes the following process:

Step 101: A personal content sharing server receives a first request message sent by the first terminal device.

In this step, an IPTV application entity in the personal content sharing server receives the first request message sent by the first terminal device. The first request message is used to request configuration of a first personal content database. Specifically, the first request message includes: attribute information of a personal content in the first personal content database, and the attribute information at least includes a content identifier of the personal content.

Step 102: The personal content sharing server generates and stores configuration information of the first personal content database according to the attribute information.

In this step, the IPTV application entity in the personal content sharing server generates and stores the configuration information of the first personal content database according to the attribute information. The configuration information of the first personal content database is formed by configuration information of at least one personal content in the first personal content database. Configuration information of each personal content includes personal content access indication information of the personal content. As for each personal content, the content identifier of the personal content is adopted to mark the personal content access indication information of the personal content. That is, the configuration information of the first personal content database includes: the content identifier of at least one personal content and the personal content access indication information corresponding to the content identifier. Specifically, the personal content includes: an IPTV on-demand content, an IPTV live content, an IPTV live content serving as an on-demand content of a personal content database, a content of an extracted clip, a personally-produced content locally provided by the first terminal, or a content of an additional cinema hall. The personal content access indication information includes any piece or a combination of multiple pieces of the following information: an access address of the IPTV on-demand content in the first personal content database, an access address of the IPTV live content, an access address of the IPTV live content serving as the on-demand content of the personal content database, an access address of the personally-produced content locally provided by the first terminal, an access address of the content of the extracted clip, an access address of the content of the additional cinema hall, start time and end time of the content of the extracted clip in the first personal content database, cinema hall establishment indication information of the content of the additional cinema hall, and a target address of the cinema hall.

Step 103: The personal content sharing server receives a second request message sent by the second terminal device.

In this step, an IPTV control entity in the personal content sharing server receives the second request message sent by the second terminal device, where the second request message is used to request establishment of a session. Specifically, the second request message includes: a content identifier of a target personal content in the first personal content database.

Step 104: The personal content sharing server obtains corresponding personal content access indication information according to the content identifier of the target personal content, and provides the second terminal device with the target personal content according to the personal content access indication information.

In this step, the IPTV control entity in the personal content sharing server obtains, from the IPTV application entity, configuration information corresponding to the content identifier of the target personal content, and establishes the session between the second terminal device and a corresponding server according to the configuration information, to enable the second terminal device to obtain the target personal content from the corresponding server.

In Embodiment 1 of the present invention, the IPTV application entity establishes the first personal content database of the first user, and stores the content identifier of the personal content of the first user into the first personal content database, the second user sends a request message including the content identifier of the target personal content in the first personal content database by using the second terminal device, the IPTV control entity obtains the corresponding configuration information by using the IPTV application entity according to the content identifier, and the IPTV control entity establishes the session between the second terminal device and the corresponding server according to the configuration information, so that the second terminal device is capable of obtaining and watching the corresponding personal content. Therefore, in a case where no pushing is performed by the first user, the second user can still actively obtain the personal content of the first user by accessing the first personal content database, thereby extending the application scope of the personal content sharing service.

Based on the foregoing technical solution, further, in step 102, before the generating and storing configuration information of the first personal content database according to the attribute information, the method may further include the following steps: if the attribute information indicates that the personal content includes the IPTV live content serving as the on-demand content of the personal content database, recording and storing the live program after receiving the first request message, and storing the access address of the IPTV live content serving as the on-demand content of the personal content database into the configuration information of the first personal content database; and if the attribute information indicates that the personal content includes the personally-produced content, sending, by the personal content sharing server, a content uploading notification message to the first terminal device, to instruct the user of the first terminal device to upload the personally-produced content, storing the personally-produced content uploaded by the user, and storing the access address of the personally-produced content into the configuration information of the first personal content database.

Based on the foregoing technical solution, if the attribute information indicates that the personal content is the content of the extracted video clip, the configuration information includes: the start time and the end time of the extracted clip; and in step 104, the enabling, according to the configuration information, the second terminal device to obtain the target personal content includes: transmitting a media stream between the start time and the end time of the extracted clip to the second terminal device.

Based on the foregoing technical solution, if the attribute information indicates that the personal content is the content of the additional cinema hall, the configuration information includes: the cinema hall establishment indication information and the target address of the cinema hall; and in step 104, the enabling, according to the configuration information, the second terminal device to obtain the target personal content includes: guiding the second terminal device to join the cinema hall. Further, if the attribute information indicates that the personal content is the content of the additional cinema hall, before the receiving the second request message sent by the second terminal device, the method may further include: receiving, by the personal content sharing server, a cinema hall session establishment request message of the first terminal, where the cinema hall session establishment request message includes the content identifier of the target personal content, and the configuration information corresponding to the content identifier includes the cinema hall establishment indication information; and requesting, by the personal content sharing server according to the cinema hall establishment indication information, a virtual space server to establish the cinema hall, so that the virtual space server establishes the cinema hall, and adds the first terminal device to the cinema hall.

With Embodiment 2 to Embodiment 5 of the present invention, the following introduces in detail the personal content sharing method proposed in the present invention by taking an IPTV system based on an open IPTV forum (Open IPTV Forum, OIPF for short) architecture as an example. In the IPTV system based on the OIPF architecture, a content server specifically corresponds to a content delivery network (Content Delivery Network, CDN for short) CDN entity.

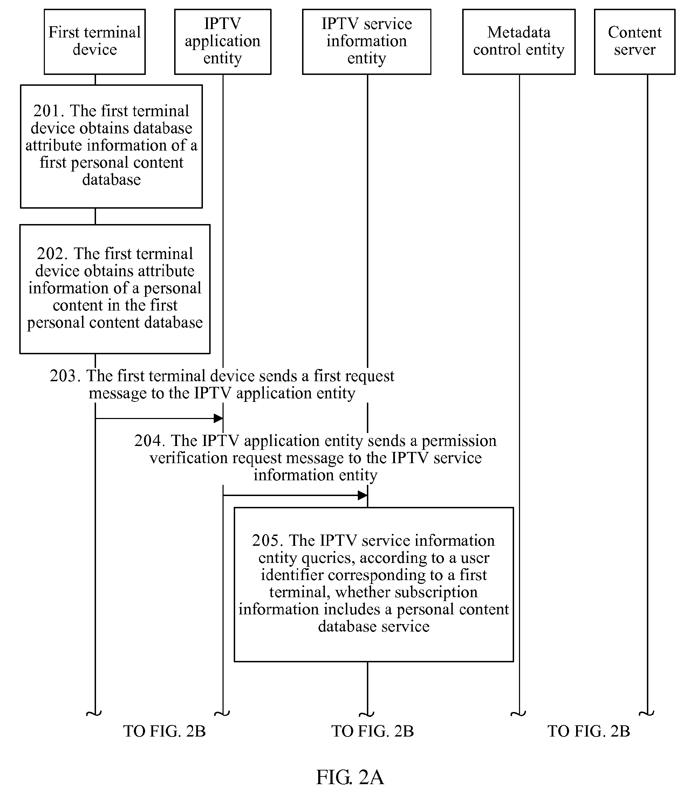

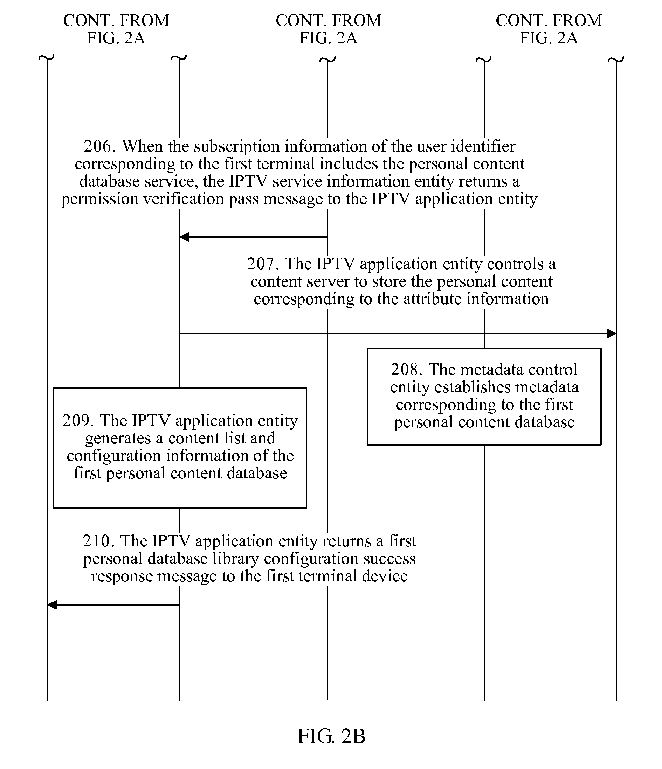

FIG. 2 is a signaling flow chart of establishing a personal content database by a first terminal device in a personal content sharing method according to Embodiment 2 of the present invention. Embodiment 2 of the present invention adopts the same personal content sharing method as Embodiment 1 of the present invention. In Embodiment 2 of the present invention, a specific process of establishing the personal content database by the first terminal device in the method is described in detail. As shown in FIG. 2, the process of establishing the personal content database by the first terminal device specifically includes the following steps.

Step 201: The first terminal device obtains database attribute information of a first personal content database.

In this step, a first user sends a first personal content database establishment command to a first terminal, where the command includes the database attribute information of the first personal content database. Specifically, the database attribute information defines an attribute of the first personal content database, for example, the database attribute information may include: a name and an organization structure of the first personal content database, where the organization structure includes at least one categorized database obtained by dividing the first personal content database, a name of each categorized database, and the like.

Step 202: The first terminal device obtains attribute information of a personal content in the first personal content database.

In this step, the personal content may not only include a content provided by an IPTV system, but also include a personally-produced content locally provided by the first terminal device.

In a case where the personal content is the content provided by the IPTV system, a specific process of step 202 is: invoking, by the first user, a content list of the IPTV system by using the first terminal device, selecting at least one content from the content list of the IPTV system as the personal content; and obtaining, by the first terminal device, attribute information of the personal content according to the content list of the IPTV system. Specifically, the content provided by the IPTV system may include: an IPTV on-demand content, an IPTV live content, an IPTV live content serving as an on-demand content of the personal content database, a content of an extracted clip, and the like. The first user may select a first content in the foregoing contents. The content of the extracted clip is set by the first user according to an actual demand. Specifically, the user invokes the content list of the IPTV system by using the first terminal device, selects a target personal content from the content list, and sets start time of the clip and end time of the clip within a playing time period of the target personal content. A content between the start time of the clip and end time of the clip is the content of the extracted clip.

In a case where the personal content is the personally-produced content locally provided by the first terminal device, a specific process of step 202 is: selecting, by the first user, at least one content from the personally-produced content locally provided by the first terminal device as the personal content; and using, by the first terminal device, attribute information of the locally stored content as the attribute information of the personal content. Specifically, the personally-produced content locally provided by the first terminal device may be stored in the first terminal device or another device, and may be any content file, which may specifically include: an audio content or a video content produced by the first user, a collection of choice specimens produced by the first user according to the content provided by the IPTV system, a blog and a picture of the first user, or the like.

Step 203: The first terminal device sends a first request message to an IPTV application entity.

In this step, the first request message at least includes: a user identifier of the first user, the database attribute information of the first personal content database, and the attribute information of the personal content. On this basis, optionally, the first request message may further include: access permission information.

Specifically, the database attribute information is used to describe the attribute of the first personal content database, including the name and the organization structure of the database. A content attribute includes the content identifiers, names, sources, and other description information of personal contents in the database, where the description information may indicate a type of the personal content. If the personal content is the on-demand content or the live content provided by the IPTV system, the content attribute of the personal content may only include the content identifier, and a code stream in the IPTV system and corresponding to the content may be mapped to according to the content identifier. Specifically, as for the same content, the content identifier of the content in the personal content database may be the same as the content identifier of the content in the IPTV system. Alternatively, a content identifier is allocated for each content in the personal content database, and mapping exists between the content identifier and the content provided by the IPTV system. The corresponding content is obtained from the IPTV system according to the mapping. Alternatively, if the personal content is the on-demand content or the live content provided by the IPTV system, the content attribute of the personal content may include playing time of the content, such as start time and end time of the content. If the personal content is the content of the extracted clip provided by the IPTV system, on a basis of including the content identifier consistent with the content identifier in the IPTV system, the content attribute of the personal content may further include a location of the extracted content, such as: start time and end time of the extracted content. If the personal content is the IPTV live content serving as the on-demand content of the personal content database, which is provided by the IPTV system, on a basis of including the content identifier or the playing time, the content attribute of the personal content may further include a recording manner, a recording format, a duration of the content, a content size, and the like, which are used to instruct a recording operation, where the recording manner may adopt a network recording manner or a local recording manner. If the personal content is the personally-produced content locally provided by the first terminal device, the content attribute of the personal content may include description information such as a content source and a content size.

In other specific implementation manners, a second user may watch the content of the personal content database of the first user by using a cinema hall service. In this case, the content attribute of the personal content needing to be pushed by using the cinema hall may further include description information such as a trigger condition for establishing the cinema hall. In Embodiment 5 of the present invention, this case is described in detail with a specific embodiment.

Optionally, the first request message may further include permission information. The permission information is set by the first user and is used to specify access permission of other users on the first personal content database or on one or more personal contents in the first personal content database. For example, the permission information includes: allowing the second user to access the first personal content database, and prohibiting a third user from accessing the first personal content database; or, the permission information includes: allowing the second user to access a first content, a second content, and a third content in the first personal content database, and allowing a third user to access the first content in the first personal content database and prohibiting the third user from accessing the second content and the third content in the first personal content database.

After step 203, step 204 to step 206 may be performed first to verify whether the first user subscribes to a personal content database service, and then step 207 is performed; or, permission verification may not be performed on the first user, that is, the first user subscribes to the personal content database service by default, and step 207 is directly performed after step 203.

Step 204: The IPTV application entity sends a permission verification request message to an IPTV service information entity.

In this step, the permission verification request message includes: a user identifier corresponding to the first terminal, that is, the user identifier of the first user.

Step 205: The IPTV service information entity queries, according to the user identifier corresponding to the first terminal, whether subscription information includes the personal content database service.

Step 206: When the subscription information of the user identifier corresponding to the first terminal includes the personal content database service, the IPTV service information entity returns a permission verification pass message to the IPTV application entity.

Step 207: The IPTV application entity controls a content server to store the personal content corresponding to the attribute information.

In this step, if there is an IPTV live content serving as the on-demand content of the personal content database or a personally-produced content locally provided by the first terminal device, the IPTV application entity controls the content server to store the personal content corresponding to the attribute information to the content server. As for the IPTV live content serving as the on-demand content of the personal content database, the IPTV application entity may query, according to the content identifier in the content attribute, a schedule of playing a content of the IPTV system, to obtain playing time of the content. When the IPTV system starts to play the content, the IPTV application entity controls the content server to record the content synchronously, and stores the recorded content into the content server.

As for the personally-produced content locally provided by the first terminal device, firstly, the IPTV application entity sends a personal content uploading request message to the content server; then, after the IPTV application entity receives a response of the content server, the IPTV application entity initiates a personal content uploading invitation to the first terminal device; and finally, the first terminal device uploads, to the content server according to the personal content uploading invitation, the personal content corresponding to the attribute information and stored in the first terminal device, and the content server stores the content.

Step 208: A metadata control entity establishes metadata corresponding to the first personal content database.

In step 207, the content server completes storing the personal content in the first personal content database. Accordingly, in step 208, firstly, the metadata control entity updates metadata corresponding to the personal content, where specifically, the metadata corresponding to each personal content may include but is not limited to the following information: the content identifier, an access address, and the like; then, the IPTV application entity transmits other metadata related to the first content database to the metadata control entity, where the other metadata related to the first content database may include: the database attribute information of the first content database, a protocol used to transmit a content, a transmission rate, a purchasing manner, and the like; and finally, the metadata control entity aggregates the metadata corresponding to the personal content and the other metadata of the first content database to form metadata corresponding to the first content database.

Step 209: The IPTV application entity generates a content list and configuration information of the first personal content database.

In this step, the IPTV application entity generates the content list and the configuration information of the first personal content database according to the metadata corresponding to the first content database established by the metadata control entity. Specifically, the content list may be in a form of an electronic program guide (Electronic Program Guide, EPG for short). Specifically, the configuration information of the first personal content database includes the configuration information of each personal content in the first personal content database, which may include: personal content access indication information, and further, may further include: the access permission information. When the personal content access indication information is used to instruct other users to access the personal content, a network side entity and/or a terminal device needs to perform an operation, for example, obtain the start time and the end time of the extracted content, trigger establishment of the cinema hall, or the like. The personal content access indication information may be generated according to the attribute information carried by the first request message in the foregoing step 203. The access permission information is used to indicate permission information for allowing other users to access or prohibiting other users from accessing the first personal content database or one or more personal contents in the first personal content database. The access permission information may also be generated according to the attribute information carried by the first request message in the foregoing step 203. The generated configuration information of the first personal content database is stored in the IPTV application entity. Specifically, the configuration information of each personal content in the first personal content database is stored, and mapping between the configuration information of each personal content and the content identifier, in the first personal content database, of the personal content corresponding to the configuration information is stored. In a subsequent process, the corresponding configuration information may be queried and obtained from the IPTV application entity according to the content identifier.

Step 210: The IPTV application entity returns a first personal content database configuration success response message to the first terminal device.

In Embodiment 2 of the present invention, the first terminal device sends the first request message to the IPTV application entity, the IPTV application entity controls, according to the configuration request message, the content server to store the personal content of the first content database, and the IPTV application entity generates the content list and the configuration information of the first personal content database, to successfully establish the first personal content database, so that the second user accesses the first personal content database by using the second terminal device, and obtains the personal content in the first personal content database. In this way, the second user can obtain multiple personal contents in the first personal content database in one content pushing process, thereby improving the content pushing efficiency.

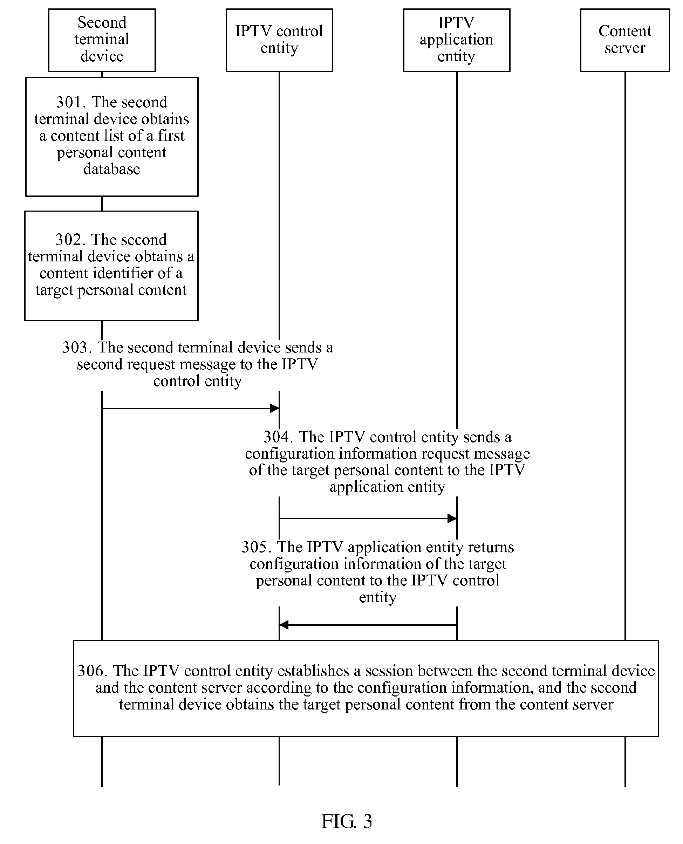

FIG. 3 is a signaling flow chart of obtaining a personal content of a first content database by a second terminal device in a personal content sharing method according to Embodiment 3 of the present invention. Embodiment 3 of the present invention adopts the same personal content sharing method as Embodiment 1 of the present invention. In Embodiment 3 of the present invention, a specific process of obtaining the personal content of the first content database by the second terminal device in the method is described in detail. The process of obtaining the personal content of the first content database by the second terminal device starts after all the steps shown in FIG. 2 are completed. As shown in FIG. 3, the process of obtaining the personal content of the first content database by the second terminal device specifically includes the following steps.

Step 301: The second terminal device obtains a content list of the first personal content database.

In this step, the second terminal device obtains the content list of the first personal content database, and displays the content list to a second user. Specifically, the second terminal device may obtain the content list of the first personal content database by using multiple specific methods, and the following briefly introduces four preferred methods among the methods.

Method 1: Firstly, the second user sends a user identifier of the first user corresponding to a first terminal to a content server by using the second terminal device. Then, an IPTV application entity returns the content list of the first personal content database to the second terminal device according to the user identifier.

Method 2: The second user subscribes to the first personal content database in advance by using the second terminal device. After the first user establishes or updates a content of the first content database, the content server initiates a notification to a subscriber, and the second user obtains the content list of the first personal content database by using the second terminal device.

Method 3: After establishing or updating the personal content database, the first user sends personal content database information to the second user by using a short message or an e-mail, where the short message or the e-mail includes a link of the content list of the first personal content database. The second user obtains the content list of the first personal content database according to the personal content database information by using the second terminal device.

Method 4: After establishing or updating the first personal content database, the first user publishes the personal content database information in a social network, for example: publishes the link of the content list of the first personal content database in the social network. The second user, according to a friend trend in the social network, obtains the content list of the first personal content database by using the second terminal device.

Step 302: The second terminal device obtains a content identifier of a target personal content.

In this step, the second user selects a content expected to be watched as the target personal content according to the content list of the first personal content database, and sends target personal content indication information to the second terminal device, where the indication information includes the content identifier of the target personal content in the first personal content database.

Step 303: The second terminal device sends a second request message to an IPTV control entity.

In this step, the second request message includes a user identifier corresponding to the first terminal device and the content identifier of the target personal content. The user identifier corresponding to the first terminal device is the user identifier of the first user.

Step 304: The IPTV control entity sends a configuration information request message of the target personal content to the IPTV application entity.

In this step, the IPTV control entity sends the configuration information request message of the target personal content to the IPTV application entity according to the second request message. The configuration information request message of the target personal content includes the content identifier of the target personal content, which is used to indicate to the IPTV application entity that the configuration information requested by the message is the configuration information of the target personal content corresponding to the content identifier.

Step 305: The IPTV application entity returns the configuration information of the target personal content to the IPTV control entity.

In this step, the IPTV application entity queries locally stored configuration information and mapping between the configuration information and the content identifier according to the content identifier of the target personal content in the configuration information request message of the target personal content in step 304, to obtain the configuration information corresponding to the content identifier of the target personal content, and returns the configuration information to the IPTV control entity.

If the target personal content is an on-demand content, a live content, or an IPTV live content serving as an on-demand content of the personal content database, which is provided by the IPTV system, or a personally-produced content locally provided by the first terminal, after step 207, the personal content is stored into the content server in a manner of recording or uploading, and accordingly the configuration information only includes an access address of the target personal content, and the access address is used to indicate a storage location of the target personal content in the content server.

If the target personal content is a content of an extracted clip, the configuration information not only includes the access address of the target personal content, but also needs to include start time and end time of the content of the extracted clip. Specifically, the case where the target personal content is the content of the extracted clip is described in detail in Embodiment 4 of the present invention.

If a manner that the second user watches a content of the personal content database of the first user by using a cinema hall service is adopted, and a content attribute of the target personal content includes description information such as a trigger condition for establishing the cinema hall, the configuration information not only includes the access address of the target personal content, but also includes cinema hall establishment indication information. Specifically, the case where the content attribute of the target personal content includes the description information such as the trigger condition for establishing the cinema hall is described in detail in Embodiment 5 of the present invention.

Step 306: The IPTV control entity establishes a session between the second terminal device and the content server according to the configuration information, and the second terminal device obtains the target personal content from the content server.

In this step, the IPTV control entity performs determination according to the configuration information. If the configuration information includes access permission information, the IPTV control entity firstly verifies access permission of a user corresponding to the second terminal device according to the access permission information, that is, the access permission of the second user, and determines whether the second user has permission to access the target personal content. The IPTV control entity establishes the session only when the second user has the access permission.

In Embodiment 3 of the present invention, after obtaining the content list of the first content database, the second user selects the target personal content from the content list, and sends the second request message to a network side by using the second terminal device. The IPTV control entity, the IPTV application entity, and the content server on the network side establish the session according to the configuration information of the first personal content database, so that the second terminal device obtains the target personal content from the content server. By establishing the first personal content database and pushing the content list of the first personal content database to the second user, all the contents of the first personal content database can be pushed to the second user in one content pushing process, thereby improving the content pushing efficiency. Moreover, after the first user completes establishing the first personal content database, the second user may obtain the content list of the first personal content database by actively applying for obtaining the content list, or in a manner that the first user recommends the content list to the second user separately, or in a manner that the first user publishes the content list in the social network. The second user can flexibly obtain the content list of the first personal content database in multiple manners, thereby further improving the pushing efficiency and flexibility of the content pushing process.

In Embodiment 3 of the present invention, if the second user obtains a recorded content from the first personal content database and watches the recorded content, a specific method for establishing the session between the second terminal device and the content server by the IPTV control entity according to the configuration information may adopt any specific method for establishing the session in an IPTV system in the prior art, and a specific method for obtaining the target personal content by the second terminal device from the content server may adopt any specific method for obtaining the personal content in the IPTV system in the prior art. The specific methods adopted in the foregoing two processes are not limited. If the second user obtains the content of the extracted clip from the first personal content database and watches the content of the extracted clip, the following specific process in Embodiment 4 of the present invention may be implemented. If the second user obtains and watches a content in a cinema hall manner, the following specific process in Embodiment 5 of the present invention may be implemented.

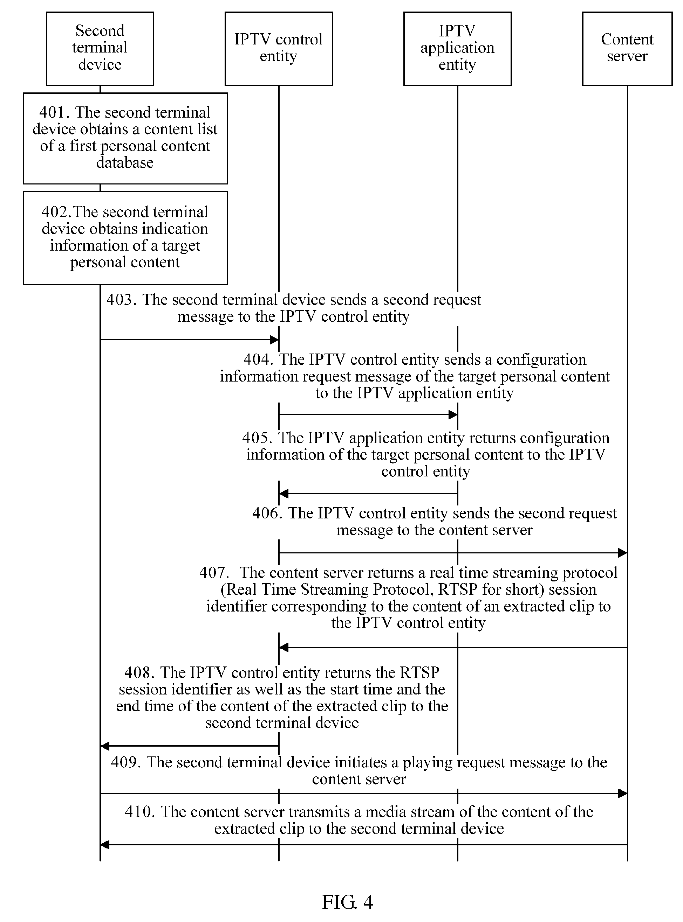

FIG. 4 is a signaling flow chart of obtaining a personal content of a first content database by a second terminal device in a personal content sharing method according to Embodiment 4 of the present invention. Embodiment 4 of the present invention adopts the same personal content sharing method as Embodiment 1 of the present invention. In Embodiment 4 of the present invention, a specific process of obtaining the personal content of the first content database by the second terminal device in the personal content sharing method shown in FIG. 3 is described in detail with an example where a pushed personal content is a content of an extracted clip. The process of obtaining the personal content of the first content database by the second terminal device starts after all the steps shown in FIG. 2 are completed. As shown in FIG. 4, in the case where the pushed personal content is the content of the extracted clip, the process of obtaining the personal content of the first content database by the second terminal device specifically includes the following steps.

Step 401: The second terminal device obtains a content list of the first personal content database.

Step 402: The second terminal device obtains indication information of a target personal content.

Step 403: The second terminal device sends a second request message to an IPTV control entity.

Step 401 to step 403 in Embodiment 4 of the present invention are respectively the same as step 301 to step 303 in Embodiment 3 of the present invention, which are not described herein again. Specifically, in Embodiment 4 of the present invention, the target personal content is the content of the extracted clip, and the second request message carries indication information of the content of the extracted clip.

Step 404: The IPTV control entity sends a configuration information request message of the target personal content to an IPTV application entity.

Step 405: The IPTV application entity returns configuration information of the target personal content to the IPTV control entity.

In Embodiment 4 of the present invention, because the target personal content is the content of the extracted clip, the configuration information not only includes an access address of the content of the extracted clip, but also includes start time and end time of the content of the extracted clip.

Step 406: The IPTV control entity sends the second request message to a content server.

In this step, the second request message carries the indication information of the content of the extracted clip.

Step 407: The content server returns a real time streaming protocol (Real Time Streaming Protocol, RTSP for short) session identifier corresponding to the content of the extracted clip to the IPTV control entity.

Step 408: The IPTV control entity returns the RTSP session identifier as well as the start time and the end time of the content of the extracted clip to the second terminal device.

Step 409: The second terminal device initiates a playing request message to the content server.

In this step, the playing request message carries the RTSP session identifier as well as the start time and the end time of the content of the extracted clip. The start time and the end time of the content of the extracted clip may be added in a form of a header field of an RTSP value field. A specific embodiment of the header field of the RTSP value field is as follows:
PLAY rtsp://Cluster.orangeCDN.net/chevaliers_du_ciel //a PLAY request is initiated to a CDN server

| | |
|---|---|
| CSeq: 1981 | // a serial number of a message |
| Session: 940211290776250 | // rtsp session ID |
| Range: npt=10-15 | // the content from the 10^{th} second |

to the 15^{th} second is requested to be played

Step 410: The content server transmits a media stream of the content of the extracted clip to the second terminal device.

In this step, the content server transmits the media stream of the content of the extracted clip to the second terminal device, and the second terminal device receives and plays the media stream. Then, the second user can watch the content of the extracted clip.

In Embodiment 4 of the present invention, after obtaining the content list of the first personal content database, the second terminal device obtains the configuration information of the target personal content from the IPTV application entity by using the IPTV control entity, and obtains the media stream of the target personal content from the content server according to the configuration information, so that the second terminal device obtains and plays, by using the content list of the first personal content database, the personal content pushed by the first terminal device. Because the content list of the first personal content database includes multiple personal contents, multiple personal contents can be pushed to the second terminal device in one content pushing process, thereby improving the content pushing efficiency.

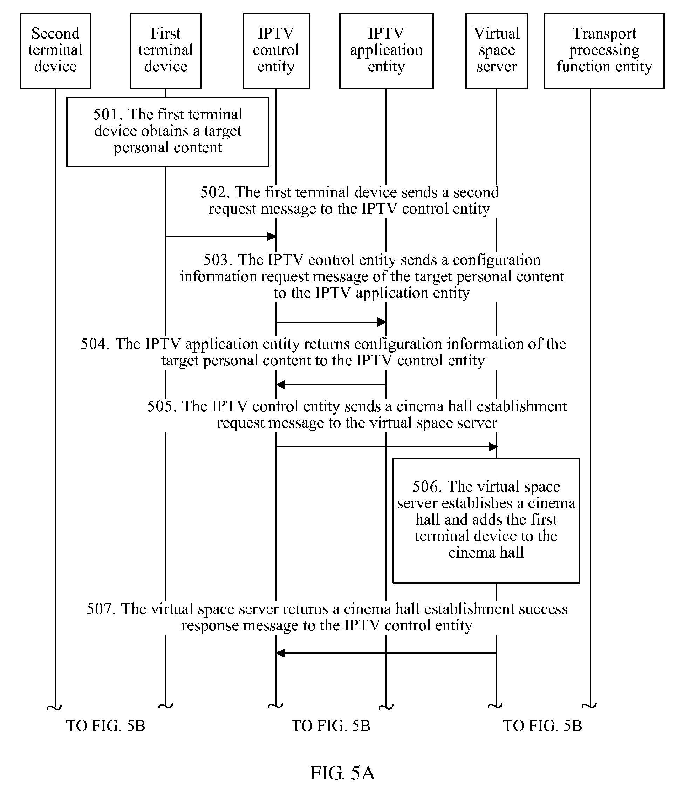

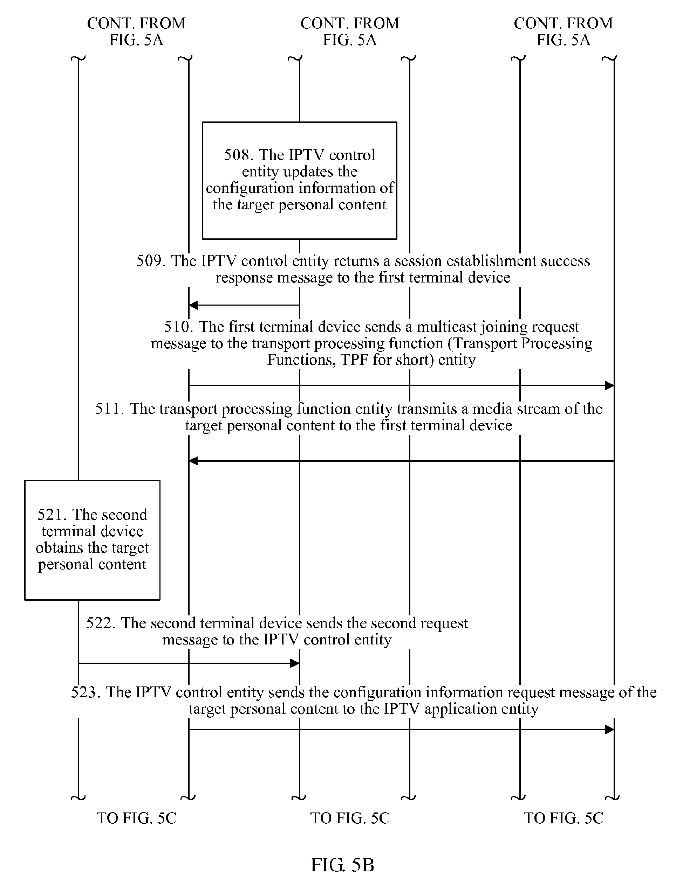

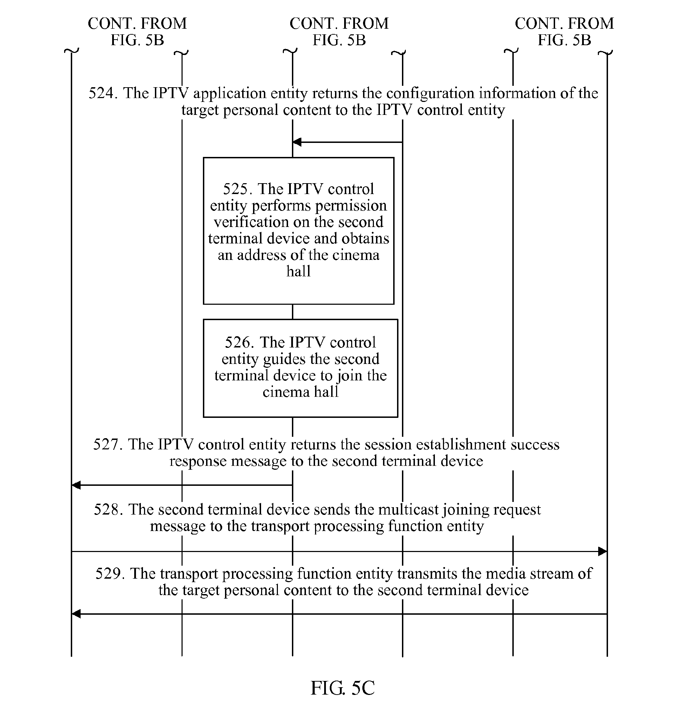

FIG. 5 is a signaling flow chart of obtaining a personal content of a first content database by a second terminal device in a personal content sharing method according to Embodiment 5 of the present invention. Embodiment 5 of the present invention adopts the same personal content sharing method as Embodiment 1 of the present invention. In Embodiment 5 of the present invention, a specific process of obtaining the personal content of the first content database by the second terminal device in the personal content sharing method shown in FIG. 3 is described in detail with an example where a pushed personal content is a personal content watched by using a cinema hall service. The process of obtaining the personal content of the first content database by the second terminal device starts after all the steps shown in FIG. 2 are completed. As shown in FIG. 5, in the case where the pushed personal content is the personal content watched by using the cinema hall service, the process of obtaining the personal content of the first content database by the second terminal device specifically includes the following steps.

The cinema hall service is used to enable all users accessing the same cinema hall to synchronously watch the same content. Moreover, on a basis of synchronously watching the same content, a chat room may further be established. All the users accessing the cinema hall can perform communication and discussion in the chat room while watching the content. In Embodiment 5 of the present invention, with an example where a first user establishes the cinema hall, a process of establishing and accessing the cinema hall by the first user is firstly executed, which includes the following step 501 to step 511.

Step 501: A first terminal device obtains a target personal content.

In this step, the first user selects a personal content to be watched from a content list of a first personal content database as the target personal content, and delivers a control signal used to indicate the target personal content to the first terminal device. In Embodiment 5 of the present invention, the target personal content is a personal content played by adopting the cinema hall.

Step 502: The first terminal device sends a second request message to an IPTV control entity.

In this step, the second request message includes a content identifier of the target personal content.

Step 503: The IPTV control entity sends a configuration information request message of the target personal content to an IPTV application entity.

Step 504: The IPTV application entity returns configuration information of the target personal content to the IPTV control entity.

In Embodiment 5 of the present invention, because the target personal content is the content watched by using the cinema hall, the configuration information not only includes an access address of the personal content, but also includes cinema hall establishment indication information and a target address of the cinema hall. Specifically, the target address of the cinema hall may be an address of a virtual space server. The target address of the cinema hall may be preconfigured in the IPTV application entity, or, the target address of the cinema hall is specified by the first user when establishing the personal content database.

Step 505: The IPTV control entity sends a cinema hall establishment request message to the virtual space server.

In this step, the IPTV control entity obtains the address of the virtual space server according to the target address of the cinema hall in the configuration information, and sends the cinema hall establishment request message to the corresponding virtual space server according to the address.

Step 506: The virtual space server establishes the cinema hall and adds the first terminal device to the cinema hall.

In this step, the virtual space server establishes the cinema hall according to the cinema hall establishment request message, where a target address in the establishment request message is an address of a request service. The virtual space server allocates an actual address of the cinema hall for the cinema hall according to the cinema hall establishment request message, for example, as for cinema hall establishment requests from different users, the server allocates different actual addresses for different users to use.

Step 507: The virtual space server returns a cinema hall establishment success response message to the IPTV control entity.

Step 508: The IPTV control entity updates the configuration information of the target personal content.

In this step, the IPTV control entity firstly requests the configuration information from the IPTV application entity through an interface connected to the IPTV application entity. Then, the IPTV control entity updates the configuration information of the target personal content, where the IPTV control entity updates the actual address of the cinema hall into the configuration information of the target personal content.

Step 509: The IPTV control entity returns a session establishment success response message to the first terminal device.

Step 510: The first terminal device sends a multicast joining request message to a transport processing function (Transport Processing Functions, TPF for short) entity.

In this step, the multicast joining request message includes: a multicast address of the personal content.

Step 511: The transport processing function entity transmits a media stream of the target personal content to the first terminal device.

In this step, the transport processing function entity adds the first terminal device to a multicast channel of a live content of the cinema hall, and transmits the media stream of the target personal content to the first terminal device.

After step 511, the first terminal device completes establishing and accessing the cinema hall, and the cinema hall plays the target personal content. If the target personal content selected to be watched from the content list of the first personal content database by a second user is also a target program content in the cinema hall, a process of accessing the cinema hall by the second user is executed, which includes the following step 521 to step 529.

Step 521: The second terminal device obtains the target personal content.

In this step, the second user selects the personal content to be watched from the content list of the first personal content database as the target personal content, and delivers the control signal used to indicate the target personal content to the second terminal device. In Embodiment 5 of the present invention, the target personal content obtained by the second terminal device and the target personal content obtained by the first terminal device in the foregoing step 501 are the same personal content.

Step 522: The second terminal device sends the second request message to the IPTV control entity.

In this step, the second request message carries the content identifier of the target personal content.

Step 523: The IPTV control entity sends the configuration information request message of the target personal content to the IPTV application entity.

Step 524: The IPTV application entity returns the configuration information of the target personal content to the IPTV control entity.

Step 525: The IPTV control entity performs permission verification on the second terminal device and obtains the address of the cinema hall.

Step 526: The IPTV control entity guides the second terminal device to join the cinema hall.

Step 527: The IPTV control entity returns the session establishment success response message to the second terminal device.

Step 528: The second terminal device sends the multicast joining request message to the transport processing function entity.

In this step, the multicast joining request message includes: the multicast address of the personal content.

Step 529: The transport processing function entity transmits the media stream of the target personal content to the second terminal device.

In this step, the transport processing function entity adds the second terminal device to the multicast channel of the live content of the cinema hall, and transmits the media stream of the target personal content to the second terminal device.

After step 529, both the first terminal device and the second terminal device are added to the cinema hall, and the first terminal device and the second terminal device synchronously play the target personal content in the cinema hall. Further, the first user and the second user may further perform real-time message exchange with a communication function of the cinema hall by using the first terminal device and the second terminal device respectively, to communicate about a program being watched by them.

In the specific process of the foregoing Embodiment 5 of the present invention, the first terminal device establishes the cinema hall; when the target personal content selected by the second user using the second terminal device is the content watched by using the cinema hall, the second terminal device accesses the cinema hall; and the first user and the second user synchronously watch the personal content. In other specific embodiments of the present invention, the second terminal device may also establish the cinema hall; after the second terminal device establishes the cinema hall, the first terminal device accesses the cinema hall; and the first user and the second user synchronously watch the personal content. In a specific implementation manner for establishing the cinema hall by the second terminal device, the specific process of establishing the cinema hall by the second terminal device is the same as the process of establishing the cinema hall by the first terminal device in Embodiment 5 of the present invention, that is, the operations executed by the first terminal device in the foregoing step 501 to step 511 are completed by the second terminal device in this specific implementation manner. In the specific implementation manner for establishing the cinema hall by the second terminal device, the specific process of accessing the cinema hall by the first terminal device is the same as the process of accessing the cinema hall by the second terminal device in Embodiment 5 of the present invention, that is, the operations executed by the second terminal device in the foregoing step 521 to step 529 are completed by the first terminal device in this specific implementation manner.

In Embodiment 5 of the present invention, the cinema hall is established, so that the first user and the second user can synchronously watch the same personal content, thereby improving the flexibility for sharing the personal content while improving the efficiency for sharing the personal content.

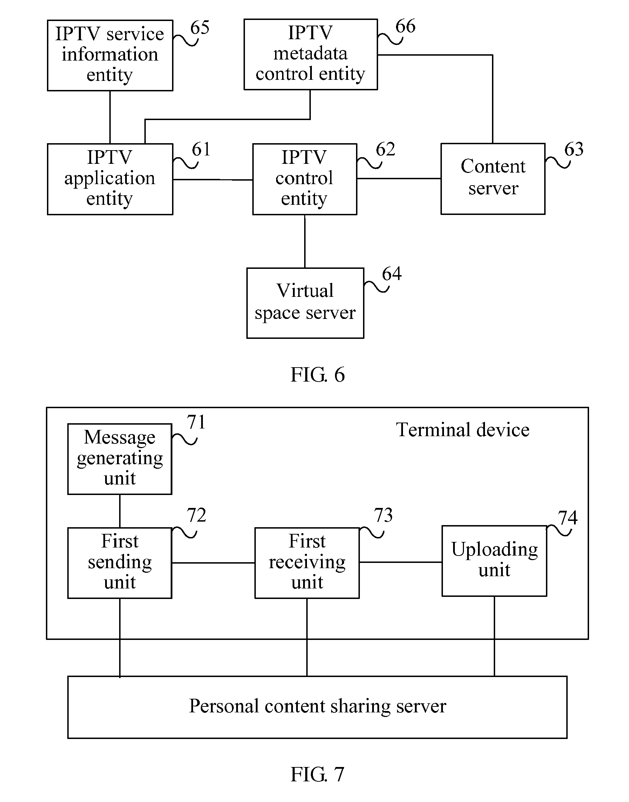

FIG. 6 is a schematic structural diagram of a personal content sharing server according to Embodiment 6 of the present invention. As shown in FIG. 6, the personal content discovering system at least includes: an IPTV application entity 61, an IPTV control entity 62, and a content server 63.

The IPTV application entity 61 is configured to receive a first request message sent by a first terminal device, where the first request message includes: attribute information of a personal content in a first personal content database; and the IPTV application entity 61 is configured to generate and store configuration information of the first personal content database according to the attribute information, where the configuration information of the first personal content database includes: a content identifier of at least one personal content, and personal content access indication information corresponding to the content identifier.

The IPTV control entity 62 is configured to receive a second request message sent by a second terminal device, where the second request message includes: a content identifier of a target personal content in the first personal content database; and the IPTV control entity 62 is configured to obtain corresponding personal content access indication information from the IPTV application entity 62 according to the content identifier of the target personal content, and establish a session between the second terminal device and the content server 63 according to the personal content access indication information.

The content server 63 is configured to store the personal content in the first personal content database, and provide the second terminal device with the target personal content by using the session.

On a basis of the foregoing technical solution, that is, on a basis of including the IPTV application entity 61, the IPTV control entity 62, and the content server 63, the personal content sharing server further includes: a virtual space server 64. The virtual space server 64 is configured to establish a cinema hall according to a cinema hall establishment request message. The IPTV control entity 62 is further configured to send the cinema hall establishment request message to the virtual space server 64, and guide the second terminal device to join the cinema hall. The content server 63 is further configured to provide the second terminal device with the target personal content by using the cinema hall. Specifically, in the case where the personal content sharing server includes the virtual space server 64, the content server 63 may be specifically implemented by adopting a transport processing function entity.

On a basis of the foregoing technical solution, specifically, the personal content sharing server further includes: an IPTV service information entity 65 and an IPTV metadata control entity 66. The IPTV application entity 61 is further configured to send a permission verification request message including a user identifier corresponding to a first terminal to the IPTV service information entity 65, and control, according to a permission verification pass message, the content server 63 to store the personal content of the first personal content database. The IPTV service information entity 65 is configured to store subscription information, query, according to the permission verification request message, whether the subscription information of the user identifier corresponding to the first terminal includes a personal content database service, and if the subscription information includes a personal content database service, return the permission verification pass message to the IPTV application entity 61. The IPTV metadata control entity 66 is configured to establish metadata corresponding to the first personal content database and store the metadata into the content server.

Based on the foregoing technical solution, further, the personal content includes: an IPTV on-demand content, an IPTV live content, an IPTV live content serving as an on-demand content of a personal content database, a content of an extracted clip, a personally-produced content locally provided by the first terminal, and a content of an additional cinema hall.

The attribute information of the personal content in the first personal content database includes: the content identifier, a name, a source, or description information of the personal content.

The configuration information of the first personal content database includes: the IPTV on-demand content, the IPTV live content, the IPTV live content serving as the on-demand content of the personal content database, the personally-produced content locally provided by the first terminal, the content of the extracted clip, and an access address of the content of the additional cinema hall in the first personal content database, start time and end time of the content of the extracted clip in the first personal content database, as well as cinema hall establishment indication information of the content of the additional cinema hall and a target address of the cinema hall.

Based on the foregoing technical solution, further, the first request message further includes: permission information, where the permission information is used to set access permission of other users except a user using the first terminal device on the first personal content database or on at least one personal content in the first personal content database.

Based on the foregoing technical solution, further, when the personal content includes the IPTV live content serving as the on-demand content of the personal content database, the IPTV application entity 61 is further configured to record and store the live program after receiving the first request message, and store an access address of the IPTV live content serving as the on-demand content of the personal content database into the configuration information of the first personal content database. When the personal content includes the personally-produced content, the IPTV application entity 61 is further configured to instruct the user to upload the personally-produced content, store the personally-produced content uploaded by the user to the content server, and store an access address of the personally-produced content into the configuration information of the first personal content database.

Based on the foregoing technical solution, when the personal content is the content of the extracted video clip, the IPTV application entity 61 is specifically configured to generate and store the configuration information including the start time and the end time of the extracted clip; and the IPTV control entity 62 is specifically configured to transmit a media stream between the start time and the end time of the extracted clip to the second terminal device.

Based on the foregoing technical solution, when the personal content is the content of the additional cinema hall, the IPTV application entity 61 is specifically configured to generate and store the configuration information including the cinema hall establishment indication information and the target address of the cinema hall; and the IPTV control entity 62 is specifically configured to guide the second terminal device to join the cinema hall. Based on the foregoing technical solution, further, when the personal content is the content of the additional cinema hall, the IPTV control entity 62 is further configured to receive a cinema hall session establishment request message of the first terminal, where the cinema hall session establishment request message includes the content identifier of the target personal content, and the configuration information corresponding to the content identifier includes the cinema hall establishment indication information; and the IPTV control entity 62 is further configured to request the virtual space server to establish the cinema hall.

For the specific working processes and the executive functions of the components in the personal content sharing server, reference may be made to the relevant records in the foregoing Embodiment 1 to Embodiment 5 of the present invention, and details are not described herein again.

In Embodiment 6 of the present invention, the first user establishes, by using the first terminal device, the first personal content database by using the IPTV application entity in the personal content sharing server, and stores the content identifier of the personal content of the first user into the first personal content database; the second user obtains a content list of the first personal content database by using the second terminal device, so as to select a personal content from the list and obtain a content identifier of the selected content. The corresponding personal content can be obtained and watched by using the IPTV control entity and the IPTV application entity according to the content identifier. Therefore, by adopting the content sharing server, in a case where no pushing is performed by the first user, the second user can still actively obtain the personal content of the first user by accessing the first personal content database, thereby extending the application scope of the personal content sharing service.

The foregoing introduces the structure of the personal content sharing server of the present invention, and the following describes a structure of a terminal device with the following embodiments of the present invention.

FIG. 7 is a schematic structural diagram of a terminal device according to Embodiment 7 of the present invention. The terminal device serves as the first terminal device in the foregoing embodiments of the present invention. As shown in FIG. 7, the terminal device at least includes: a message generating unit 71 and a first sending unit 72.

The message generating unit 71 is configured to generate a first request message. The first request message includes: attribute information of a personal content in a first personal content database.

The first sending unit 72 is configured to send the first request message to a personal content sharing server, so that the personal content sharing server generates and stores configuration information of the first personal content database according to the attribute information. The configuration information of the first personal content database includes: a content identifier of at least one personal content and personal content access indication information corresponding to the content identifier.

Based on the foregoing technical solution, further, the terminal device may further include: a first receiving unit 73 and an uploading unit 74. The first receiving unit 73 is configured to receive a content uploading notification message from the personal content sharing server. The uploading unit 74 is configured to upload a personally-produced content to the personal content sharing server according to the content uploading notification message.

Based on the foregoing technical solution, further, the terminal device may further include: a cinema hall establishment request unit 75. The cinema hall establishment request unit 75 is configured to send a cinema hall session establishment request message to the personal content sharing server, so that the personal content sharing server requests a virtual space server to establish a cinema hall. The cinema hall session establishment request message includes a content identifier of the target personal content, and configuration information corresponding to the content identifier includes cinema hall establishment indication information.

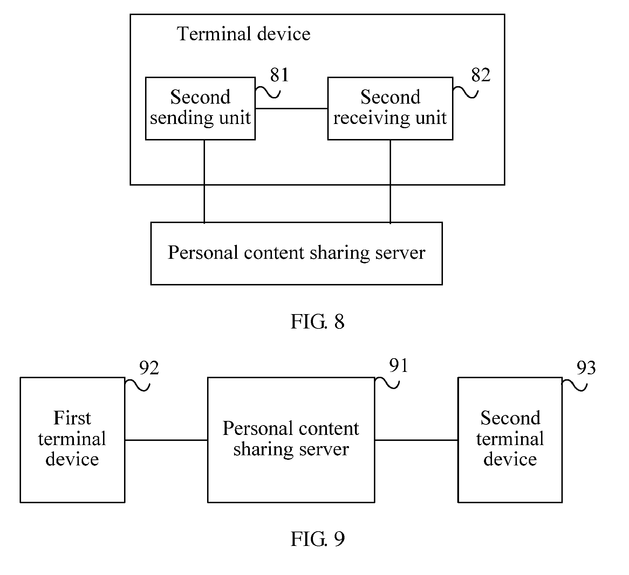

FIG. 8 is a schematic structural diagram of a terminal device according to Embodiment 8 of the present invention. The terminal device serves as the second terminal device in the foregoing embodiments of the present invention. As shown in FIG. 8, the terminal device at least includes: a second sending unit 81 and a second receiving unit 82.

The second sending unit 81 is configured to send a second request message to a personal content sharing server, so that the personal content sharing server obtains corresponding personal content access indication information according to a content identifier of a target personal content. The second request message includes: the content identifier of the target personal content in a first personal content database.

The second receiving unit 82 is configured to receive the target personal content provided by the personal content sharing server according to the personal content access indication information.

FIG. 9 is a schematic structural diagram of a personal content sharing system according to Embodiment 9 of the present invention. As shown in FIG. 9, the personal content sharing system at least includes: a personal content sharing server 91, a first terminal device 92, and a second terminal device 93. For the executive functions and the internal structures of the personal content sharing server 91, the first terminal device 92, and the second terminal device 93, reference may be made to the relevant descriptions in the foregoing Embodiment 1 to Embodiment 8 of the present invention, and details are not described herein again.

It should be noted that: for brevity of the descriptions, the foregoing method embodiments are described as a combination of a series of actions. However, persons skilled in the prior art should be aware that the present invention is not limited to the sequence of the described actions. Because some steps may be performed by adopting other sequences or simultaneously according to the present invention. In addition, persons skilled in the prior art should also be aware that, the embodiments described in the specification are exemplary embodiments, and the related actions and modules are not necessarily required by the present invention.

In the foregoing embodiments, the descriptions of the embodiments have their respective focuses, and for a part of a certain embodiment that is not described in detail, reference may be made to relevant descriptions of other embodiments.

Persons of ordinary skill in the art may understand that, all or a part of the steps of the foregoing method embodiments may be implemented by a program instructing relevant hardware. The foregoing program may be stored in a computer readable storage medium. When the program runs, the foregoing steps of the method embodiments are performed. The foregoing storage medium includes various mediums capable of storing program codes, such as a ROM, a RAM, a magnetic disk, or an optical disc.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A personal content sharing method, comprising:
receiving, by a personal content sharing server, a first request message sent by a first terminal device, wherein the first request message comprises: attribute information of a personal content in a first personal content database, and the attribute information at least comprises a content identifier of the personal content;
generating and storing, by the personal content sharing server, configuration information of the first personal content database according to the attribute information, wherein the configuration information of the first personal content database comprises: a content identifier of at least one personal content and personal content access indication information corresponding to the content identifier;
receiving, by the personal content sharing server, a second request message sent by a second terminal device, wherein the second request message comprises: a content identifier of a target personal content in the first personal content database; and
obtaining, by the personal content sharing server, corresponding personal content access indication information according to the content identifier of the target personal content, and providing the second terminal device with the target personal content according to the personal content access indication information.

2. The method according to claim 1, wherein the attribute information of the personal content in the first personal content database comprises:
the content identifier, a name, a source, or description information of the personal content, wherein the description information indicates a type of the personal content.

3. The method according to claim 2, wherein,
the first request message further comprises: permission information, wherein the permission information is used to set access permission of other users except a user using the first terminal device on the first personal content database or on at least one personal content in the first personal content database; and
before the providing the second terminal device with the target personal content according to the personal content access indication information, the method further comprises: verifying, according to the permission information, whether the second terminal device has permission to access the target personal content, and if the second terminal device has permission to access the target personal content, executing the step of providing the second terminal device with the target personal content according to the personal content access indication information.

4. The method according to claim 2 or 3, wherein,
according to indication of the description information of the personal content, the personal content comprises: an IPTV on-demand content, an IPTV live content, an IPTV live content serving as an on-demand content of a personal content database, a content of an extracted clip, a personally-produced content locally provided by a first terminal, or a content of an additional cinema hall;
if the personal content comprises the IPTV on-demand content, the personal content access indication information comprises: an access address of the IPTV on-demand content in the first personal content database;
if the personal content comprises the IPTV live content, the personal content access indication information comprises: an access address of the IPTV live content in the first personal content database;
if the personal content comprises the IPTV live content serving as the on-demand content of the personal content database, the personal content access indication information comprises: an access address of the IPTV live content serving as the on-demand content of the personal content database in the first personal content database;
if the personal content comprises the personally-produced content locally provided by the first terminal, the personal content access indication information comprises: an access address of the personally-produced content locally provided by the first terminal and in the first personal content database;
if the personal content comprises the content of the extracted clip, the personal content access indication information comprises: start time, end time, and an access address of the content of the extracted clip in the first personal content database; and
if the personal content comprises the content of the additional cinema hall, the personal content access indication information comprises: cinema hall establishment indication information of the content of the additional cinema hall in the first personal content database, and a target address of the cinema hall.

5. The method according to claim 4, wherein before the generating and storing, by the personal content sharing server, configuration information of the first personal content database according to the attribute information, the method further comprises:
if the personal content comprises the IPTV live content serving as the on-demand content of the personal content database, recording and storing, by the personal content sharing server, the live program after receiving the first request message, and storing the access address of the IPTV live content serving as the on-demand content of the personal content database into the configuration information of the first personal content database.

6. The method according to claim 4 or 5, wherein before the generating and storing, by the personal content sharing server, configuration information of the first personal content database according to the attribute information, the method further comprises:
if the personal content comprises the personally-produced content, sending, by the personal content sharing server, a content uploading notification message to the first terminal device, to instruct the first terminal device to upload the personally-produced content, storing the personally-produced content uploaded by the user, and storing the access address of the personally-produced content into the configuration information of the first personal content database.

7. The method according to any one of claims 4 to 6, wherein,
if the personal content comprises the content of the extracted video clip, the providing, by the personal content sharing server, the second terminal device with the target personal content according to the configuration information comprises: transmitting a media stream between start time and end time of the extracted clip to the second terminal device.

8. The method according to any one of claims 4 to 7, wherein,
if the personal content is the content of the additional cinema hall, the providing, by the personal content sharing server, the second terminal device with the target personal content according to the configuration information comprises: guiding the second terminal device to join the cinema hall.

9. The method according to claim 8, wherein before the receiving, by the personal content sharing server, a second request message sent by a second terminal device, the method further comprises:
receiving, by the personal content sharing server, a cinema hall session establishment request message of the first terminal, wherein the cinema hall session establishment request message comprises the content identifier of the target personal content, and the configuration information corresponding to the content identifier comprises the cinema hall establishment indication information; and
requesting, by the personal content sharing server according to the cinema hall establishment indication information, a virtual space server to establish the cinema hall, so that the virtual space server establishes the cinema hall.

10. A personal content sharing server, comprising:
an IPTV application entity, configured to receive a first request message sent by a first terminal device, wherein the first request message comprises: attribute information of a personal content, and the attribute information at least comprises a content identifier of the personal content; and generate and store configuration information of a first personal content database according to the attribute information, wherein the configuration information of the first personal content database comprises: a content identifier of at least one personal content and personal content access indication information corresponding to the content identifier;
an IPTV control entity, configured to receive a second request message sent by a second terminal device, wherein the second request message comprises: a content identifier of a target personal content in the first personal content database; obtain corresponding personal content access indication information from the IPTV application entity according to the content identifier of the target personal content; and establish a session between the second terminal device and a content server according to the personal content access indication information; and
the content server, configured to store the personal content in the first personal content database, and provide the second terminal device with the target personal content by using the session.

11. The server according to claim 10, wherein the attribute information of the personal content in the first personal content database comprises:
the content identifier, a name, a source, or description information of the personal content, wherein the description information indicates a type of the personal content.

12. The server according to claim 10 or 11, wherein according to indication of the description information of the personal content, the personal content comprises: an IPTV on-demand content, an IPTV live content, an IPTV live content serving as an on-demand content of a personal content database, a content of an extracted clip, a personally-produced content locally provided by a first terminal, or a content of an additional cinema hall;
if the personal content comprises the IPTV on-demand content, the personal content access indication information comprises: an access address of the IPTV on-demand content in the first personal content database;
if the personal content comprises the IPTV live content, the personal content access indication information comprises: an access address of the IPTV live content in the first personal content database;
if the personal content comprises the IPTV live content serving as the on-demand content of the personal content database, the personal content access indication information comprises: an access address of the IPTV live content serving as the on-demand content of the personal content database in the first personal content database;
if the personal content comprises the personally-produced content locally provided by the first terminal, the personal content access indication information comprises: an access address of the personally-produced content locally provided by the first terminal and in the first personal content database;
if the personal content comprises the content of the extracted clip, the personal content access indication information comprises: start time, end time, and an access address of the content of the extracted clip in the first personal content database; and
if the personal content comprises the content of the additional cinema hall, the personal content access indication information comprises: cinema hall establishment indication information of the content of the additional cinema hall in the first personal content database, and a target address of the cinema hall.

13. The server according to any one of claims 10 to 12, further comprising:
a virtual space server, configured to establish the cinema hall according to a cinema hall establishment request message, wherein
the IPTV control entity is further configured to send the cinema hall establishment request message to the virtual space server, and guide the second terminal device to join the cinema hall; and
the content server is further configured to provide the second terminal device with the target personal content by using the cinema hall.

14. The server according to any one of claims 10 to 13, further comprising:
an IPTV service information entity, configured to store subscription information, query, according to a permission verification request message, whether subscription information of a user identifier corresponding to the first terminal comprises a personal content database service, and if the subscription information comprises a personal content database service, return a permission verification pass message to the IPTV application entity; and
an IPTV metadata control entity, configured to establish metadata corresponding to the first personal content database and store the metadata into the content server, wherein
the IPTV application entity is further configured to send the permission verification request message comprising the user identifier corresponding to the first terminal to the IPTV service information entity, and control, according to the permission verification pass message, the content server to store the personal content in the first personal content database.

15. A personal content sharing method, comprising:
generating, by a first terminal device, a first request message, wherein the first request message comprises: attribute information of a personal content in a first personal content database, and the attribute information at least comprises a content identifier of the personal content; and
sending, by the first terminal device, the first request message to a personal content sharing server, so that the personal content sharing server generates and stores configuration information of the first personal content database according to the attribute information, wherein the configuration information of the first personal content database comprises: a content identifier of at least one personal content and personal content access indication information corresponding to the content identifier.

16. The method according to claim 15, wherein after the sending, by the first terminal device, the first request message to a personal content sharing server, the method further comprises:
receiving, by the first terminal device, a content uploading notification message from the personal content sharing server; and
uploading, by the first terminal device, a personally-produced content to the personal content sharing server according to the content uploading notification message.

17. The method according to claim 15 or 16, wherein after the sending, by the first terminal device, the first request message to a personal content sharing server, the method further comprises:
sending, by the first terminal device, a cinema hall session establishment request message to the personal content sharing server, wherein the cinema hall session establishment request message comprises a content identifier of a target personal content, and configuration information corresponding to the content identifier comprises cinema hall establishment indication information, so that the personal content sharing server requests a virtual space server to establish a cinema hall.

18. A terminal device, comprising:
a message generating unit, configured to generate a first request message, wherein the first request message comprises: attribute information of a personal content in a first personal content database, and the attribute information at least comprises a content identifier of the personal content; and
a first sending unit, configured to send the first request message to a personal content sharing server, so that the personal content sharing server generates and stores configuration information of the first personal content database according to the attribute information, wherein the configuration information of the first personal content database comprises: a content identifier of at least one personal content and personal content access indication information corresponding to the content identifier.

19. The device according to claim 18, further comprising:
a first receiving unit, configured to receive a content uploading notification message from the personal content sharing server; and
an uploading unit, configured to upload a personally-produced content to the personal content sharing server according to the content uploading notification message.

20. The device according to claim 18 or 19, further comprising:
a cinema hall establishment request unit, configured to send a cinema hall session establishment request message to the personal content sharing server, wherein the cinema hall session establishment request message comprises a content identifier of a target personal content, and configuration information corresponding to the content identifier comprises cinema hall establishment indication information, so that the personal content sharing server requests a virtual space server to establish a cinema hall.

21. A personal content sharing method, comprising:
sending, by a second terminal device, a second request message to a personal content sharing server, wherein the second request message comprises: a content identifier of a target personal content in a first personal content database, so that the personal content sharing server obtains corresponding personal content access indication information according to the content identifier of the target personal content; and
receiving, by the second terminal device, the target personal content provided by the personal content sharing server according to the personal content access indication information.

22. A terminal device, comprising:
a second sending unit, configured to send a second request message to a personal content sharing server, wherein the second request message comprises: a content identifier of a target personal content in a first personal content database, so that the personal content sharing server obtains corresponding personal content access indication information according to the content identifier of the target personal content; and
a second receiving unit, configured to receive the target personal content provided by the personal content sharing server according to the personal content access indication information.

23. A personal content sharing system, comprising: the personal content sharing server according to claims 10 to 14, the terminal device according to claims 18 to 20, and the terminal device according to claim 22.
